# EUROPEAN PATENT SPECIFICATION

(11) **EP 2 560 920 B1**
(45) Date of publication and mention of the grant of the patent: **16.09.2020**
(21) Application number: 10850386.3
(22) Date of filing: 23.04.2010
(51) Int. Cl.: C01D 15/00, C01D 15/08

(54) **A PROCESS FOR MAKING LITHIUM CARBONATE FROM LITHIUM CHLORIDE**
VERFAHREN ZUR HERSTELLUNG VON LITHIUMCARBONAT AUS LITHIUMCHLORID
PROCÉDÉ DE FABRICATION DU CARBONATE DE LITHIUM À PARTIR DU CHLORURE DE LITHIUM

(43) Date of publication of application: 27.02.2013
(60) Divisional application: 20189608.1
(73) Proprietor: TerraLithium LLC, Houston, Texas 77046 (US)
(72) Inventor: HARRISON, Stephen, Benicia, CA 94510 (US)
(74) Representative: Barton, Matthew Thomas
(86) International application number: PCT/US2010/032213
(87) International publication number: WO 2011/133165

(56) References cited:
- US-A- 4 036 713
- US-A- 4 036 713
- US-A- 4 209 369
- US-A- 5 219 550
- US-A- 5 219 550
- US-A1- 2005 011 753

## Description

### Technical Field of the Invention

This invention generally relates to the field of converting lithium chloride into lithium carbonate.

### Description of the Prior Art

It is known that geothermal brines can include various metal ions, particularly alkali and alkaline earth metals, in varying concentrations, depending upon the source of the brine. Recovery of these metals is important to the chemical and pharmaceutical industries.

Geothermal brines are of particular interest for a variety of reasons. First, geothermal brines provide a source of power due to the fact that hot geothermal pools are stored at high pressure underground, which when released to atmospheric pressure, can provide a flash-steam. The flash-stream can be used, for example, to run a power plant. Additionally, geothermal brines typically contain various useful metals, such as, lithium, lead, silver and zinc, each of which can be recovered from the brine for further use.

Elemental lithium may be recovered from ores, as the ore may be baked with sulfuric acid, and the product leached with water. The resulting lithium sulfate solution is treated with lime and soda ash to remove calcium and magnesium, and lithium is then precipitated as a carbonate. Other known methods for recovering lithium from ores include alkaline methods and ion-exchange methods, each of which can yield solutions of lithium as hydroxide, chloride or sulfate. These methods may also include the removal of calcium and magnesium by treatment with lime and soda ash.

Typically, the economic recovery of lithium from natural, predominantly chloride, brines (which may vary widely in composition), depends not only on the overall lithium content, but also upon the concentrations of interfering ions, particularly calcium and magnesium, which can greatly effect the performance and economics of the lithium recovery. Magnesium can be difficult to remove because it is chemically similar to lithium in solution. Generally, at low concentrations, magnesium may be removed by precipitation with lime as magnesium carbonate. At higher magnesium concentrations, removal with lime is not feasible and various ion exchange and liquid-liquid extraction methods have been proposed.

Although conventional processing of ores and brines makes it possible to eliminate major portions of interfering ions, there remains a need for the simplified removal of interfering ions from brines for the production of lithium carbonate.

### Summary of the Invention

A method for the preparation of lithium carbonate from a lithium chloride containing solution as defined in claim 1 is provided.

### Brief Description of the Drawings

Figure 1 is a schematic diagram of one embodiment of an apparatus for the production of lithium carbonate from a chlorine containing solution.
Figure 2 is a schematic diagram of one embodiment of an apparatus for the production of lithium carbonate from a chlorine containing solution.
Figure 3 is a schematic diagram of one embodiment of an apparatus for the production of lithium carbonate from a chlorine containing solution according to invention.
Figure 4 shows the compares of lithium hydroxide concentration for multiple embodiments of the present invention.
Figure 5 shows variation of cell voltage of an electrolysis cell during preparation of lithium hydroxide.
Figure 6 shows lithium hydroxide concentration as a function of current efficiency.
Figure 7 shows energy consumption for production of lithium hydroxide.

### Detailed Description of the Invention

Broadly, described herein are methods for the production of lithium carbonate from a lithium chloride containing solution.

As used herein, brine solution refers to a solution of alkali and/or alkaline earth metal salt(s) in water, wherein the concentration of salts can vary from trace amounts up to the point of saturation. Generally, brines suitable for the methods described herein can be aqueous solutions that may include alkali metal or alkaline earth chlorides, bromides, sulfates, hydroxides, nitrates, and the like, as well as natural brines. Brines can be obtained from natural sources, such as, Chilean brines or Salton Sea geothermal resource brines, geothermal brines, sea water, mineral brines (e.g., lithium chloride or potassium chloride brines), alkali metal salt brines, and industrial brines, for example, industrial brines recovered from ore leaching, mineral dressing, and the like. The present methods are equally applicable to artificially prepared lithium chloride solutions.

Accordingly, the present methods include the preparation and recovery of lithium carbonate from solutions that include monovalent cations, including lithium, multivalent cations, monovalent anions, and multivalent anions.

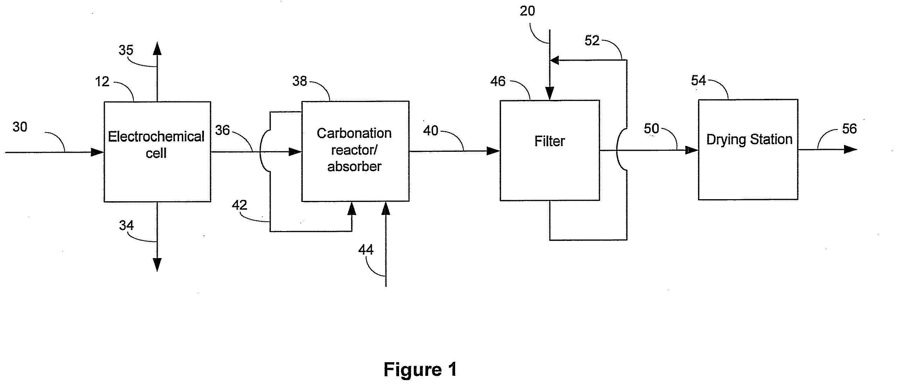

Referring to Figure 1, in a method not according to the invention, lithium chloride containing solution 30 is provided. The lithium chloride containing solution 30 can have a concentration of between about 1% and 42% by weight, preferably greater than about 10% by weight, more preferably greater than about 25% by weight. In alternate embodiments, lithium chloride containing stream 30 may have a concentration of greater than about 10% by weight.

Lithium chloride containing solution 30 can optionally undergo a purification or concentration step prior to being provided to electrolytic cell 32. In certain embodiments, it is desirable to eliminate divalent ions and silica from the lithium chloride containing solution. Methods for the isolation and purification of lithium chloride from brines, including geothermal brines, are known in the art, for example, as described in U.S. Pat. Nos. 4,036,713 and 5,951, 843.

Optionally, the process can include steps for increasing the concentration of the lithium chloride stream. Specifically, lithium concentrating means (not shown) can be utilized for the removal of a portion of the water in the lithium chloride containing solution 30, for example, by evaporation, thereby producing a more concentrated lithium chloride solution. Exemplary concentration means can include electrodialysis, steam evaporation, or solar evaporation. In embodiments employing a concentration step, overall concentration of concentrated lithium chloride containing solution 30 can be increased to greater than 25% lithium chloride by weight, preferably up to about 42% lithium chloride by weight.

Lithium chloride containing solution 30 can be supplied to electrochemical cell 32, which can include at least one anode, one cathode and a permeable membrane, for the electrochemical preparation of lithium hydroxide. Electrochemical cells suitable for large scale production are commercially available from companies, such as, DeNora, Chlorine Engineers, and Asahi Glass, to name a few. Specifically, chloride ions are oxidized to chlorine at the anode and water is reduced to hydroxide ions and hydrogen gas at the cathode. In certain embodiments, concentrated lithium chloride containing solution 30 is substantially free of other ions, particularly ions that may interfere with the electrochemical reaction. Optionally, a lithium chloride containing stream 30 can supplied directly to the electrochemical reaction, without being first being subjected to the silica management and lithium ion sequestration steps, provided that the lithium chloride containing solution is substantially free of non-lithium ions, particularly non-lithium ions that may interfere with the electrochemical reaction. In certain embodiments, the concentration of sodium and/or potassium ions in concentrated lithium chloride containing solution 30 is less than about 5% by weight, preferably less than about 3% by weight. Cations such as iron, calcium, magnesium, and the like, if at all present, preferably have a total concentration of less than about 0.001% by weight, more preferably less than about 0.005% by weight, and even more preferably less than about 0.00001% by weight. Higher concentrations of the interfering ions does not preclude operation of the electrochemical cell, but instead may reduce the overall life of the cell components and/or the overall effectiveness of the reaction.

Similar to that which is noted above with respect to the presence of non-lithium interfering cations, electrochemical cell 32 preferably has a total non-chloride anion content of less than about 5% by weight, preferably less than about 3% by weight, and even more preferably less than about 1% by weight.

The cathode of electrochemical cell 32 can be any suitable material, including nickel, catalyzed nickel mesh, stainless steel, coated stainless steel, mild steel, and the like. Other exemplary catalysts can include mixed ruthenium compounds, platinum and other similar compounds that have low hydrogen over potential. The total area of the cathode can be adjusted based upon reactor size and desired production. The catholyte feed of the electrochemical cell 32 can be any suitable material having sufficient ions to carry a current. While water may be employed, and in certain embodiments, the addition of lithium carbonate or lithium hydroxide may be beneficial to the operation of the cell.

The anode of electrochemical cell 32 can be any suitable material, such as titanium mesh coated with ruthenium oxide, titanium mesh coated with platinum, carbon, or the like. Preferably, the anode is a dimensionally stable anode, allowing for reduced power consumption. Dimensionally stable titanium anodes are particularly well-suited for chlorine environments as the titanium substrate is resistant to corrosion. The total area of the anode can be adjusted based upon reactor size and desired production. The anolyte of electrochemical cell 32 can be any suitable material, including a lithium chloride solution having a concentration of between of about 1% by weight to saturation, preferably between 5% and 40% by weight, more preferably between about 10% and 35% by weight.

The materials for construction of electrochemical cell 32 can be any material that is chemically resistant to chlorine, activated chlorine, oxygenated chlorine species, and other dissolved species that may exist in brine solutions. Exemplary materials for the construction of electrochemical cell 32 include polytetrafluoroethylene (PTFE), polyvinylidene fluoride (PVDF), HALAR (alternating co-polymers of ethylene and chlorotrifluoroethylene (CTFE)), and other fluorinated or partially fluorinated.

The membrane of electrochemical cell 32 can be any suitable semi-permeable cation selective membrane that selectively passes cations and inhibits the passage of anions. Such membranes are known in the art. One exemplary membrane is Nafion (E.I. DuPont de Nemours & Co.), particularly the Nafion 300, 400 and 900/9000 series of materials. Other suitable membranes can be supplied by Flemion, however any suitable membrane material can be used provided the material is chemically resistant to both chlorine and lithium hydroxide. The membrane may be placed between the anolyte being electrolyzed and the catholyte.

The process can optionally include one or more filter or separation-purification step prior to the step of supplying lithium chloride containing solution 30 or brine to electrochemical cell 32.

During operation of electrochemical cell 32, a current density of between about 500 and 10,000 A/m² can be applied at a voltage of between about 1.5 and 5 volts. Preferably, a current density of between about 2000 and 7000 A/m² is applied.

Electrochemical cell 32 may be operated at a temperature of between about 60° and 100°C, preferably between about 70° and 95°C, and more preferably between about 90° and 95°C. Cell 32 can be operated at atmospheric pressure, or slightly above atmospheric pressure.

Operation of electrochemical cell 32 produces lithium hydroxide in solution, and also evolves chlorine and hydrogen gas by products, which can be removed from the electrochemical cell via line 34 and 35, respectively.

The efficiency of electrochemical cell 32 is at least about 60%, preferably at least about 70%, more preferably at least about 80%, more preferably at least about 90%, more preferably at least about 95%, and even more preferably at up to about 99.9%. The electrolysis can be operated continually until the lithium hydroxide content reaches about 17% by weight, at which time the lithium hydroxide solution may be removed and supplied to a carbonation reactor. At lithium hydroxide concentrations greater than about 17% by weight, the lithium hydroxide in solution can begin to precipitate. Electrochemical cell 32 can also be operated under conditions designed to produce lower concentration lithium hydroxide solutions and the lower concentration lithium hydroxide solution can be recycled to and from the carbonation reactor. Electrochemical cell 32 can also include a feed line (not shown) for supplying water, low concentration lithium hydroxide, low concentration lithium carbonate, or combinations thereof to the cell.

Lithium hydroxide solution 36 is supplied from electrochemical cell 32 to carbonation reactor/absorber 38 and can be contacted with carbon dioxide gas 44, for example, in an upflow fashion. Carbonation reactor/absorber 38 can include a series of trays or other like means that are designed to allow lithium hydroxide 36 to be supplied to the top of the reactor and flow in a downward fashion through the reactor, thereby contacting up-flowing carbon dioxide gas 44, which can be introduced near the bottom of carbonation reactor/absorber 38. In alternate embodiments, carbonation reactor/absorber 38 can include various mixing means designed to facilitate mixing of liquids and gases. Optionally, carbonation reactor/absorber 38 can be a jacketed batch reactor having thermostatic heating. The reaction produces lithium carbonate solid. The concentration of the lithium carbonate slurry is preferably at least about 1.5% by weight lithium carbonate, more preferably at least about 6% by weight lithium carbonate. Carbon dioxide can be captured and recycled to carbonation reactor/absorber 38 via line 42.

The lithium carbonate can produced by reaction of lithium chloride with sodium carbonate in water, wherein the mixture is heated, preferably to a temperature of between about 90°C and 95°C, with stirring. The reaction produces solid lithium carbonate and a sodium chloride solution, wherein the sodium chloride solution can be separated by filtration from the desired lithium carbonate solids.

Lithium carbonate solution 40 can be supplied to filtration means 46, which is operable to separate lithium carbonate containing slurry 40 into water stream 52, which may optionally be resupplied to the filtration means, and solid lithium carbonate product 50. Filtration means 46 can, for example, include a series of screens or filters and water supply 48. Optionally, water can be recycled to the process via line 52. Optionally, lithium carbonate can be concentrated from the slurry by centrifugation or decantation thickening. Water collected during the separation of the solids from the slurry via filtration means 46 can be supplied to the electrochemical cell, or may be supplied to a geothermal well or reservoir. In certain embodiments, lithium carbonate solid can be retained on a band filter and supplied to a wash step, wherein hot water, preferably having a temperature of between about 90°C and 95°C is used to wash the solids. In certain embodiments, the aqueous solution collected via filtration means 46 can have a pH of greater than about 9, most likely having a pH between about 10-12. Alternatively, sufficient acid can be added to the aqueous solution to achieve a pH of between about 5 and 8.5, and the acidified water can be supplied to a lithium extraction process. Alternatively, the solution can be returned directly to the cathode side of the electrolysis cell without prior neutralization.

The solid lithium carbonate 50 is supplied to a drying station 54, which can optionally include heating means, as well as lines for supplying nitrogen or other inert gases to the chamber. Dried lithium carbonate product 56 can then be collected, packaged and transported for further use.

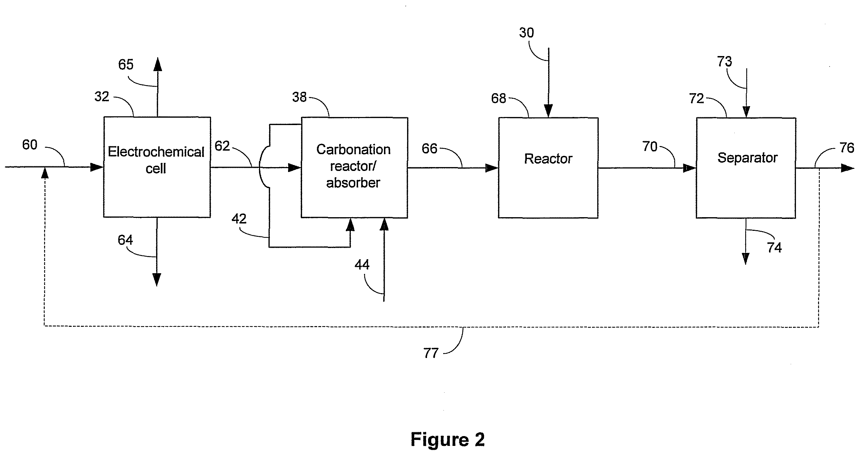

Referring now to Figure 2, a method not in accordance with the invention for the production of lithium carbonate is provided. Lithium chloride stream 30 is contacted with sodium carbonate, wherein the sodium carbonate is prepared by the electrochemical production of sodium hydroxide, which is subsequently carbonated to produce sodium carbonate.

To electrochemical cell 32, which is as described above, sodium chloride stream 60 is provided. Sodium chloride stream 60 is subjected to electrolysis to produce sodium hydroxide stream 62 and chlorine and hydrogen gases 64. Reaction conditions for the production of sodium hydroxide by electrolysis of sodium chloride are known in the art.

The efficiency of the electrolysis of sodium chloride is at least about 70%, alternatively at least about 80%, alternatively at least about 90%, or alternatively at least about 95%. In certain embodiments, sodium hydroxide solution 62 is produced in at a concentration of at least about 10% by weight, more preferably at least about 30% by weight, and most preferably about 35% by weight.

Chlorine and hydrogen gases 64, 65 can be combusted and scrubbed with water to generate hydrochloric acid, which may be used within the process, or alternately may be purified, compressed, and sold commercially.

Sodium hydroxide stream 62 is supplied to carbonation reactor/absorber 38, wherein the sodium hydroxide stream is contacted with carbon dioxide gas 44, for example, in an upflow fashion. Carbonation reactor/absorber 38 can include a series of trays, designed to allow sodium hydroxide stream 62 to be supplied to the top of the reactor and flow in a downward fashion through the reactor, thereby contacting upflowing carbon dioxide gas 44, which can be introduced near the bottom of the reactor, to produce sodium carbonate solution or slurry 66. In alternate embodiments, carbonation reactor/absorber 38 can include various mixing means designed to facilitate mixing of liquids and gases. The concentration of the solution is preferably at least 15% by weight sodium carbonate, more preferably at least 25% by weight sodium carbonate. Carbon dioxide can be captured and recycled to carbonation reactor/absorber 38 via line 42.

Sodium carbonate solution 66 is supplied to reactor 68 wherein the solution is contacted with lithium chloride solution 30 to produce slurry 70, which includes lithium carbonate and sodium chloride solution. The step of contacting sodium carbonate solution 66 and lithium chloride solution 30 in the reaction vessel can be at a temperature greater than about 60°C, preferably greater than about 80°C, and even more preferably between about 90°C and 95°C. In certain embodiments, reaction vessel 68 can be a stirred tank reactor. Alternatively, reaction vessel 68 can be a standard crystallizer. Contacting the sodium carbonate solution 66 and lithium chloride solution 30 at the above noted conditions results in the production of lithium carbonate is as a precipitate, and sodium chloride remains in aqueous solution.

Slurry 70, which includes solid lithium carbonate and aqueous sodium chloride, is supplied to separator 72, which can include various means for the separation of solids from liquids including, for example, centrifuge, settling tank, filters, screens, and the like, to produce lithium carbonate product stream 74 and sodium chloride brine solution 76. In order to attain improved product quality, the lithium carbonate can be treated to remove sodium, potassium, and/or chloride ions trapped in the interstitial space of the lithium carbonate precipitate, such as by washing with water, preferably hot water, or by like means. In certain embodiments, separator means 72 can be a band filter or rotary drum, and can optionally be fed through a counter current wash system for the removal of residual sodium chloride. Separator means 72 can also include water inlet 73 and outlet 76 for the washing of the separated solid lithium carbonate. Separator means 72 can also include means for drying and/or the removal of water from the solid lithium carbonate, including for example, centrifuge, heaters, blowers, presses, and the like. Separator means 72 can include a vacuum filter for removal of water. In certain embodiments, it is desirable to optimize the washing step to both maximize purity of the lithium carbonate while minimizing the amount of water used for washing. Sodium chloride solution 76 can be recycled to electrochemical cell 32 for electrolysis via line 77. Lithium carbonate product 74 can have a moisture content of less than about 5% by weight, preferably less than about 2% by weight, and even more preferably less than about 0.5% by weight.

The brine solution 76 from separator means 72 can include sodium chloride and lithium carbonate. Generally, depending upon the amount of water utilized in the process and during the wash process, the ratio of sodium chloride to lithium carbonate is at least about 20:1, more preferably at least about 25:1, and even more preferably at least 30:1. In certain embodiments, the ratio of sodium chloride to lithium carbonate in the brine solution can be about 35:1.

Brine solution 76 can be acidified with hydrochloric acid (not shown) to a pH of less than about 4, preferably about 3, and recycled to electrochemical cell 32. The hydrochloric acid can be supplied from electrochemical cell 32.

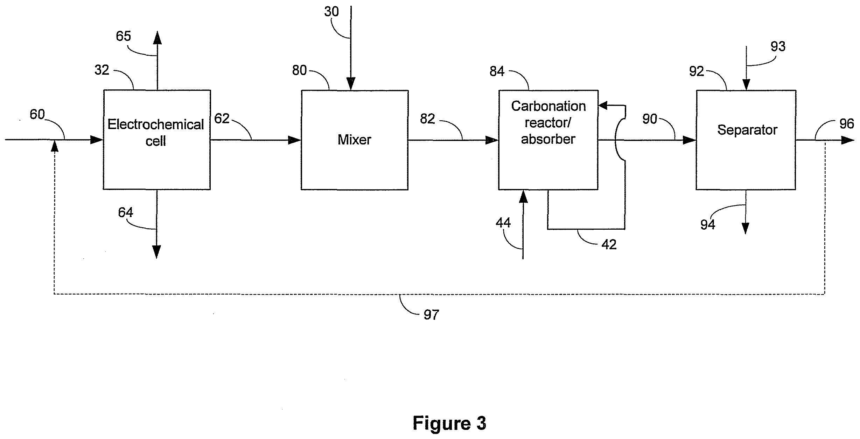

The lithium carbonate production method proposed in Figure 3 is advantageous because the process eliminates, or nearly eliminates, the production of waste products. Specifically, in certain embodiments, the recycle of unused metal salts, for example sodium chloride, and carbon dioxide, the overall yield can be quantitative or nearly quantitative.

Referring now to Figure 3, a process for the production of lithium carbonate according to the invention is provided. The method is a single step process wherein sodium carbonate is produced and reacted with recovered lithium chloride, however may require additional input and produces a waste lithium chloride stream, that may include small amounts of lithium carbonate entrained therein.

A sodium hydroxide solution is provided as described above and as shown in Figure 2. To electrochemical cell 32 sodium chloride stream 60 is provided. Sodium chloride stream 60 is subjected to electrolysis to produce sodium hydroxide 62 and chlorine and hydrogen gases 64, 65.

Sodium hydroxide stream 62 is supplied to mixer 80, wherein the sodium hydroxide stream is combined and mixed with lithium chloride stream 30. Mixing of sodium hydroxide stream 62 and lithium chloride stream 30 can be by known means, such as by agitators or mixers, with ultrasonic waves, or by the like. Mixer 80 produces mixed stream 82, which includes sodium hydroxide and lithium chloride in aqueous solution. In certain embodiments, it may be preferred that lithium chloride steam 30 has a concentration of at least about 20% by weight, more preferably at least about 28% by weight, and even more preferably at least about 42% by weight. Similarly, in certain embodiments, it may be preferred that sodium hydroxide stream 62 has a concentration of at least about 15% by weight, more preferably at least about 25% by weight, and even more preferably about 35% by weight.

Mixed stream 82 is supplied to carbonation reactor/absorber 84, which can include a series of trays, designed to allow the mixed stream, which includes lithium chloride and sodium hydroxide, to be supplied to the top of the reactor and flow in a downward fashion through the reactor, thereby allowing the mixed stream to sufficiently contact up-flowing carbon dioxide gas 44, which can be introduced near the bottom of the reactor via line 22, to produce a lithium carbonate slurry 90. Preferably, carbonation reactor/absorber 84 is maintained at a temperature of between about 90°C and 100°C. In alternate embodiments, reactor 84 can include various mixing means designed to facilitate mixing of liquids and gases. The concentration of the lithium carbonate is preferably at least 15% by weight, more preferably at least 25% by weight lithium carbonate. Carbon dioxide can be recycled to carbonation reactor 84 via line 42.

Lithium carbonate solution 90 is supplied to separation vessel 92 wherein solid lithium carbonate is produced via line 94. A solution that includes sodium chloride and possibly a small amount of lithium carbonate is produced as stream 96.

Sodium carbonate solution 90, which includes solid lithium carbonate and aqueous sodium chloride, is supplied to separator means 92, which can include various means for the separation of solids from liquids including, for example, centrifuge, settling tank, filters, screens, and the like. Separator means 92 can also include a water inlet 93 and outlet (not shown) for the washing of the separated solid lithium carbonate. Separator means 92 can also include means for drying and/or the removal of water from the solid lithium carbonate, including for example, centrifuge, heaters, blowers, presses, and the like. A solid sodium carbonate product is collected via line 94. Optionally, a portion of sodium chloride stream 96 can be recycled to electrochemical cell 32 via line 97. Optionally, the sodium chloride solution can be recycled to the washing step of the lithium extraction media. In certain embodiments, the sodium chloride required for the process can be generated by the selective crystallization of sodium chloride from the geothermal, Smackover, or other brine.

In certain embodiments, the process may include means for the neutralization of any lithium carbonate that is included in the sodium chloride solution, such as by neutralizing the solution by adding an effective amount of hydrochloric acid or like acid. In embodiments wherein the lithium carbonate can be effectively removed, the solution can be recycled to the electrochemical cell, however, any lithium carbonate included therein may cause problems with the performance of the electrochemical cell.

### Examples

### Example (not according to the invention).

Carbonation of Sodium Hydroxide. Carbonation of sodium hydroxide was carried out using a 3 liter jacketed reactor with a heating system (manufactured by Syrris Reactor Systems, UK). The reaction was carried out at a temperature of about 95°C using a one liter of a 9.5 M solution of sodium hydroxide (27.5% solids). Carbon dioxide was supplied for about 1 hour at the rate of 3 L/min. (totaling approximately 8 moles, approximately 1.7 molar equivalents) to ensure the complete conversion of sodium hydroxide. At the end of the carbonation of the sodium hydroxide solution, a clear solution of sodium carbonate was obtained, at which point the carbonation reaction was stopped and heating of the sodium carbonate solution was continued for few minutes. To the clear solution, lithium carbonate seeds were added before reacting it with a lithium chloride solution (404 g lithium chloride in 1000 mL). Experimental yield was 95%. Yields varied for other similar reactions depending upon experimental conditions and were as high as about 100% in some cases. The purity of the isolated lithium carbonate was approximately 96.6% before washing.

Before the first washing of the product stream, the lithium carbonate had the following impurities: Na (71 mg/kg), Ca (2.8 mg/kg), Mg (2.1 mg/kg), Fe (0.3 mg/kg), Ba (0.1 mg/kg), Mn (0.08 mg/kg), and Sr (0.03 mg/kg), for a purity of about 78.4%. After washing with approximately 2-3 volume equivalents of water, the sodium concentration is reduced to undetectable levels and the lithium carbonate had the following impurities: Mg (5.9 mg/kg), Ca (2.9 mg/kg), Ba (0.4 mg/kg), Fe (0.4 mg/kg), Mn (0.07 mg/kg), and Sr (0.07 mg/kg), for a purity of greater than 99%.

The washing conditions effected the amount of sodium carbonate/chloride entrained in the lithium carbonate product.

### Example : 2 (not according to the invention).

The electrolysis process converts a purified, concentrated LiCl solution into a concentrated LiOH solution for subsequent conversion to lithium bicarbonate. The limiting factor determining the efficiency of the electrochemical cell is the concentration of lithium hydroxide in the catholyte, due to back-migration of hydroxide across the membrane. Therefore, the experiment was designed wherein the electrochemical cell was operated at four different hydroxide concentrations to map the effect of the lithium hydroxide concentration and determine the maximum concentration that could be prepared. The experiment was designed to measure the current efficiency and energy utilization of the dialysis process as a function of hydroxide concentration. Within the electrochemical cell, under an applied field, Li⁺ ions migrate from the anolyte to catholyte, while water present is electrolyzed to H₂ and OH⁻ at the cathode. In theory, each electron passed in the external circuit corresponds to an increase of one LiOH molecule in the catholyte, leading to an increase in concentration of LiOH with time. The main inefficiency in the process, the back migration of OH⁻ ions from catholyte to anolyte, is dependent on the OH⁻ concentration of the catholyte. Therefore, the experiments reported here were performed with the intention of maintaining the OH⁻ concentration of the catholyte constant by adding water at a known rate. The efficiency of the reaction was measured by comparing the actual rate of addition of water with the theoretical addition.

### Example 3 (not according to the invention).

Electrolytic Production of Lithium Hydroxide from Lithium Chloride.

Experimental Set-Up. The electrolysis system consisted of the electrolysis cell having anolyte and catholyte flow systems. Electrolysis of LiCl solutions was carried out using an FM01 electrolyzer (a scale model of the FM21 electrolyzer used commercially in the chlor-alkali industry) manufatured by ICI. The electrolyzer included lantern blade-style electrodes (anode: ruthenium oxide coated titanium; and cathode: nickel), and a Nation® 982 membrane. The active surface area of each electrode was about 64 cm² (4x16 cm), and the cell gap (distance measured anode to cathode) was between about 12-13 mm. The FM01 electrolyzer was operated with the flow parallel to the 16 cm direction (as compared with a flow direction parallel to the 4 cm dimension, as it is intended to be operated), as this improved the management of chlorine and hydrogen gasses evolved from the electrodes. In addition, although anolyte and catholyte flows are normally fed from opposite sides of the cell, in the present experiment, the anolyte and catholyte were fed from the same side of the electrochemical cell.

The anolyte flow system included a feed tank, pump, degassing tank, chlorine scrubber, and collection tank. A lithium chloride solution having a concentration of about 21% by weight was placed in the anolyte feed tank and heated to about 90°C. The heated solution was pumped into the anode chamber of the cell in a single pass mode at a flow rate of about 20 cm³/min, corresponding to a face velocity of about 0.13 cm/s. Upon exiting the cell, the lithium chloride solution and entrained chlorine gas (produced at the anode) were passed through into a degassing tank, which was equipped with a chlorine scrubber, to remove the chlorine. The lithium chloride solution was then pumped into a collection tank for storage.

The catholyte flow system included a feed tank, pump, and water feed system. Lithium hydroxide was placed in the feed tank and heated to about 95°C and fed to the cathode chamber of the electrochemical cell in recirculating mode at a flow rate of about 50 mL/min, corresponding to a face velocity of about 0.33 cm/s. Water was added continuously to the system using a peristaltic pump to maintain a constant lithium hydroxide concentration. The rate of addition was monitored by the weight loss of the water tank. Nitrogen was bubbled through the catholyte recirculation tank to minimize the reaction of lithium hydroxide and carbon dioxide from the air.

Table 1 summarizes the experimental conditions used in tests to determine the effect of the concentration of the catholyte.

**Table 1. Experimental parameters for electrolysis experiments.**

| **Parameter** | **Value** |
|---|---|
| Current Density | 3000 A/m⁻² |
| Electrode Area | 64 cm² |
| Anolyte Volume | 60 cm³ |
| Catholyte Volume | 60 cm³ |
| LiCl Inlet Concentration | 21 wt% |
| LiCl Inlet pH | 0.5-0.7 |
| Temperature | 90°C |
| Time of Operation | 2-3 hours |
| Anolyte (LiCl) Flow Velocity | 0.13 cm/s |
| Catholyte (LiOH) Flow Velocity | 0.33 cm/s |

During operation of the electrochemical cell, samples were collected at the catholyte inlet and outlet and anolyte outlet ports every 30 minutes. Cell voltage was monitored at the cell terminals using a handheld multimeter. The difference between the inlet and outlet catholyte hydroxide concentrations and the cell voltage were used to calculate the efficiency and energy consumption of the cell.

### Results

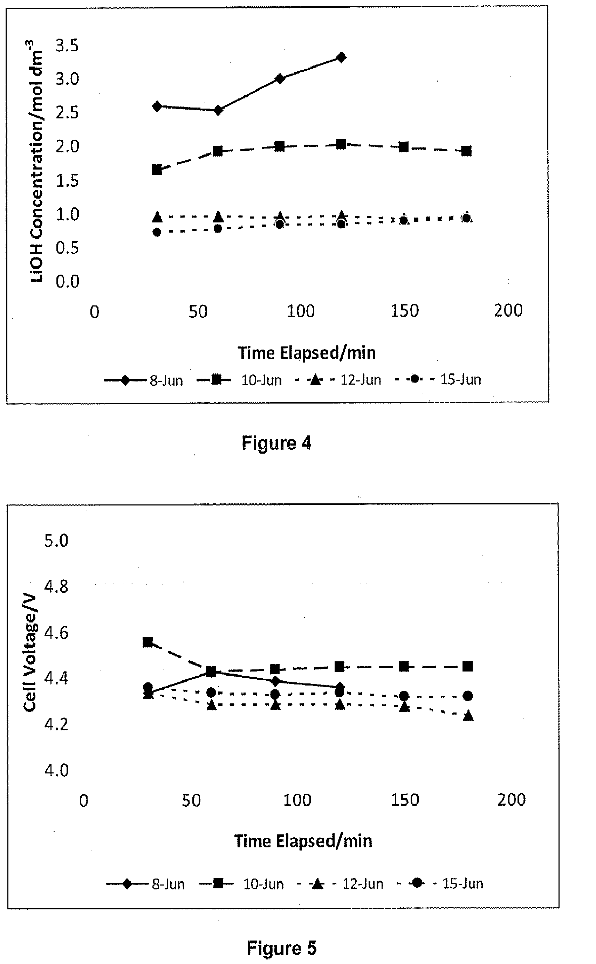

The results of the concentration of the catholyte are summarized in Table 2 and are shown in Figures 4 to 7. Figure 4 demonstrates the difficulty in maintaining a constant LiOH concentration based solely by adjusting the rate of water addition, in the absence of real-time measurements of the hydroxide concentration, because water can be consumed or added to the catholyte by a variety of mechanisms, including electrolysis, evaporation, and migration across the membrane with Li⁺ cations. In general, the data suggest that the higher the initial concentration of LiOH, the more difficult the task of maintaining the concentration constant through water addition.

The cell voltage was maintained at approximately 4.3-4.4 V for all of the experimental runs. Figure 5 shows that cell voltage is relatively independent of hydroxide concentration, and implies that energy consumption is largely driven by the electrical efficiency of the electrode and membrane reactions. The cell gap in the FM01 electrolyzer used in this experiment (12-13 mm) is large compared to the cell gap typically employed in commercial cells (2-3 mm), so a commercial cell would be expected to have a lower cell voltage than those measured here.

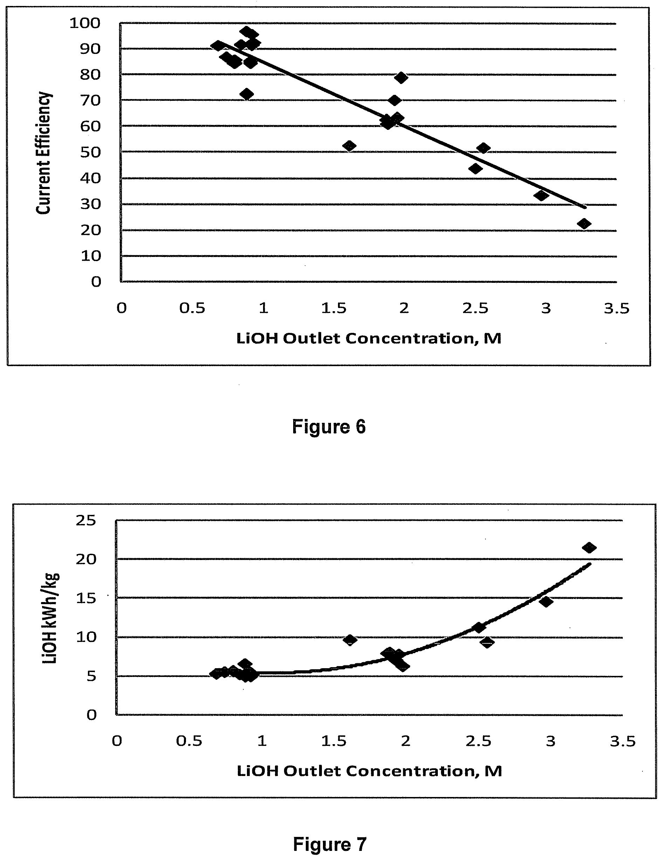

Figure 6 shows that current efficiency decreases with increasing lithium hydroxide concentration. Without wishing to be bound by any one theory, it is believed this decrease in current efficiency may be due to increased back-migration of hydroxide anions across the membrane from the catholyte to anolyte as the lithium hydroxide concentration increases. As shown in Figure 7, this also results in increased energy consumption, because all experiments were performed at the same current density and the cell voltage was essentially constant. The experiments suggest that a preferred concentration of lithium hydroxide in the electrochemical cell may be between about 1-2 M.

Table 2 summarizes the test results. As shown, lithium hydroxide production efficiency increases as lithium hydroxide concentration decreases, having an efficiency of up to about 80-88% for lithium hydroxide solutions having a concentration of about 1 M (2.4% by weight). Cell voltage is relatively independent of lithium hydroxide concentration, so the efficiency also drives the energy requirement, which decreases to about 5 kWh/kg lithium hydroxide produced at a concentration of about 1 M. Lithium hydroxide production rate is greatest with lower initial concentrations of lithium hydroxide.

**Table 2. Summary of Results.**

| **Test** | **LiOH conc. (Start)** | **LiOH conc. (Final)** | **Cell Voltage** | **Water Added** | **Efficiency** | **Production Rate*** | **Energy** |
|---|---|---|---|---|---|---|---|
| | **M** | **M** | **V** | **g/min** | **%** | **kg LiOH /m²/hr** | **kWh/kg LiOH** |
| 1 | 2.57 | 3.28 | 4.37 | 0.5 | 35 | 0.94 | 15 |
| 2 | 1.62 | 1.88 | 4.45 | 5 | 65 | 1.74 | 8 |
| 3 | 0.94 | 0.92 | 4.28 | 11 | 80 | 2.14 | 5 |
| 4 | 0.69 | 0.89 | 4.33 | 10 | 88 | 2.36 | 5.3 |

| | | | | | | | |
|---|---|---|---|---|---|---|---|
| * Calculated (Production rate = 2.68 kg LiOH/m²/hr x efficiency). | | | | | | | |

### Example 4. Carbonation.

Chemical Reactor. Lithium hydroxide was carbonated using a 3 L Syrris automated batch reactor system (Syrris Ltd. 27 Jarman Way, UK), having controls for sensing pH, temperature, reagent addition, and sample extraction. The electrolytic studies detailed above suggest that Electrolysis of lithium chloride could at most generate 1 M or 2.4 wt% lithium hydroxide solution. Indeed, this concentration has been found to be ideal for conducting carbonation studies without clogging issues under our experimental conditions.

Carbonation Reaction Kinetics. The carbonation reaction kinetics of lithium hydroxide were determined by monitoring pH and metal ion concentration in solution (using Atomic Absorption) as the reaction progressed. Approximately 84.0 g of lithium hydroxide monohydrate was dissolved in 2000 mL of water to prepare a solution having a concentration of about 1 M (about 2.4% by weight). The reactor jacket was heated using a 30:70 water-glycol mixture and the temperature of the lithium hydroxide solution was maintained at about 95°C. The solution was stirred at 250 RPM with a mechanical stirrer constantly during the carbonation. The carbonating gas tube was maintained at a depth of at least 6 cm in the caustic solution to begin with and the gas flow rate was continuously monitored using a flow meter (Matheson Tri-Gas, USA). As the carbonation progressed, the pH of the solution increased slightly and the completion of the reaction was determined by sudden drop in the pH of the solution, soon after the carbon dioxide flow to the reactor was stopped. The drop in pH coincides with the formation of lithium bicarbonate, which is unstable at higher temperatures. Therefore, the solution was heating/stirring of the solution was continued to decompose lithium bicarbonate that had formed into lithium carbonate. The decomposition of the lithium bicarbonate results in increased pH which stabilized over time. Lithium ion concentration was monitored during the reaction and showed that excess carbonation of the solution can lead to bicarbonate formation.

During carbonation, a slight molar excess of carbon dioxide was added to the lithium hydroxide solution to account for poor mixing of the carbon dioxide into the lithium hydroxide solution. After completion of the carbonation reaction, the solution was hot filtered because the lithium carbonate solubility in water decreases at increased temperatures. The filtered solids were first dried at about 60°C for about 18 hours, and were then dried at about 120°C for about 24 hrs to ensure the conversion of any residual lithium bicarbonate that may present in the solids back to lithium carbonate. The carbonation reaction was repeated several times with a 1 molar lithium hydroxide solution under slightly different experimental conditions, and both with and without lithium carbonate seeds. The results are shown in Table 3. Seeding of lithium hydroxide solution with lithium carbonate crystals improved yields. At higher carbon dioxide flow rates (e.g., at 3 L/min and greater), the yield of the carbonation reaction remained high. As shown in Table 3, carbon dioxide feed was maintained at about 2 L/min, although the total amount of carbon dioxide added varied between about 1.25 and 2.5 moles (i.e., between about 0.625 and 1.25 molar equivalents). Experiment 1 in Table 3 included the addition of nitrogen gas to the carbonation vessel. Experiments 3-5 in Table 3 included the addition of between about 0.6% and 1.2% by weight lithium hydroxide seeds. The results show that increased reaction rate can allow for a reduction in the reactor size, and reduced overall cost associated therewith.

**Table 3. Carbonation Reaction of a 2.4% by Weight Solution of LiOH^{†}**

| Exp. | Reaction Conditions | Overall Carbonation Yield (%)^{#} | Lithium Carbonate Solids Recovered (%) |
|---|---|---|---|
| 1 | CO₂ (2LPM, 2.5 moles) + N₂ (3.7 LPM) | 100.0% | 57%* |
| 2 | CO₂ (2LPM, 1.9 moles) | 93% | 73.0% |
| 3 | CO₂ (2LPM, 1.5 moles) + 1.2% Li₂CO₃ seeds | 99% | 82% |
| 4 | CO₂ (2LPM, 1.25 moles) + 0.6% Li₂CO₃ seeds | 93% | 78% |
| 5 | CO₂ (3LPM, 1.3 moles) + 1.2% Li₂CO₃ seeds | 96% | 82% |

| | | | |
|---|---|---|---|
| ^{†} Prepared by mixing 84 g lithium hydroxide (LiOH.H₂O) in 2 L water. # Overall yield includes the amount of lithium carbonate/bicarbonate dissolved in solution and deposited inside the reactor walls. *excessively carbonated and filtered without converting LiHCO₃ back into Li₂CO₃. | | | |

The methods described herein are suitable for the recovery of lithium from brines or solutions having low or high lithium concentrations, in addition to brines or solutions that include significant concentrations of other ions, including multivalent ions.

As is understood in the art, not all equipment or apparatuses are shown in the figures. For example, one of skill in the art would recognize that various holding tanks and/or pumps may be employed in the present method.

The singular forms "a", "an" and "the" include plural referents, unless the context clearly dictates otherwise.

Optional or optionally means that the subsequently described event or circumstances may or may not occur. The description includes instances where the event or circumstance occurs and instances where it does not occur.

Ranges may be expressed herein as from about one particular value, and/or to about another particular value. When such a range is expressed, it is to be understood that another embodiment is from the one particular value and/or to the other particular value, along with all combinations within said range.

Throughout this application, where patents or publications are referenced, the disclosures of these references in their entireties are intended to be incorporated by reference into this application, in order to more fully describe the state of the art to which the invention pertains, except when these reference contradict the statements made herein.

As used herein, recitation of the term about and approximately with respect to a range of values should be interpreted to include both the upper and lower end of the recited range.

Although the present invention has been described in detail, it should be understood that various changes, substitutions, and alterations can be made hereupon without departing from the principle and scope of the invention. Accordingly, the scope of the present invention should be determined by the following claims and their appropriate legal equivalents.

## Claims

1. A method for the preparation of lithium carbonate from a lithium chloride containing brine solution, the method comprising the steps of:
electrolyzing sodium chloride in an electrochemical cell to produce a sodium hydroxide solution, said electrochemical cell comprising an anode, a cathode, and a semi-permeable membrane separating an anode chamber and a cathode chamber;
contacting said sodium hydroxide solution with a lithium chloride containing solution in a reaction vessel to produce a solution comprising lithium hydroxide;
contacting the solution comprising lithium hydroxide with carbon dioxide gas in a reaction vessel to produce a solution that includes lithium carbonate; and
separating a product stream from the reaction vessel to provide a lithium carbonate product and a stream comprising sodium chloride.

2. The method of any of the preceding claims further comprising concentrating the lithium chloride containing stream prior to supplying the stream to the electrochemical cell.

3. The method of any of the preceding claims wherein said lithium chloride containing solution is a geothermal brine.

4. The method of any of the preceding claims wherein the cathode is selected from nickel, catalyzed nickel mesh, stainless steel and coated stainless steel.

5. The method of any of the preceding claims wherein the electrochemical cell includes an anode, wherein is a dimensionally stable anode selected from titanium mesh coated with ruthenium oxide, titanium mesh coated with platinum and carbon.

6. The method of any of the preceding claims further comprising recycling at least a portion of the sodium chloride stream to the electrochemical cell for the production of sodium hydroxide.

## Patentansprüche

1. Verfahren für die Herstellung von Lithiumcarbonat aus einer Lithiumchlorid enthaltenden Solelösung, wobei das Verfahren die folgenden Schritte umfasst:
Elektrolysieren von Natriumchlorid in einer elektrochemischen Zelle, um eine Natriumhydroxidlösung zu erzeugen, wobei die elektrochemische Zelle eine Anode, eine Kathode und eine semipermeable Membran umfasst, die eine Anodenkammer und eine Kathodenkammer trennt;
Inberührungbringen der Natriumhydroxidlösung mit einer Lithiumchlorid enthaltenden Lösung in einem Reaktionsgefäß, um eine Lösung zu erzeugen, die Lithiumhydroxid umfasst;
Inberührungbringen der Lösung, die Lithiumhydroxid umfasst, mit Kohlendioxidgas in einem Reaktionsgefäß, um eine Lösung zu erzeugen, die Lithiumcarbonat beinhaltet; und
Trennen eines Erzeugnisstroms von dem Reaktionsgefäß, um ein Lithiumcarbonaterzeugnis und einen Strom, der Natriumchlorid umfasst, bereitzustellen.

2. Verfahren nach einem der vorhergehenden Ansprüche, das ferner ein Konzentrieren des Lithiumchlorid enthaltenden Stroms vor einem Zuführen des Stroms zu der elektrochemischen Zelle umfasst.

3. Verfahren nach einem der vorhergehenden Ansprüche, wobei die Lithiumchlorid enthaltende Lösung eine geothermische Sole ist.

4. Verfahren nach einem der vorhergehenden Ansprüche, wobei die Kathode aus Nickel, katalysiertem Nickelnetz, rostfreiem Stahl und beschichtetem rostfreiem Stahl ausgewählt ist.

5. Verfahren nach einem der vorhergehenden Ansprüche, wobei die elektrochemische Zelle eine Anode beinhaltet, wobei eine formstabile Anode aus einem mit Rutheniumoxid beschichteten Titannetz, einem mit Platin beschichteten Titannetz und Kohlenstoff ausgewählt ist.

6. Verfahren nach einem der vorhergehenden Ansprüche, das ferner ein Rückführen wenigstens eines Anteils des Natriumchloridstroms in die elektrochemische Zelle für die Erzeugung von Natriumhydroxid umfasst.

## Revendications

1. Procédé de préparation de carbonate de lithium à partir d'une solution de saumure contenant du chlorure de lithium, le procédé comprenant les étapes :
d'électrolyse du chlorure de sodium dans une cellule électrochimique afin de produire une solution d'hydroxyde de sodium, ladite cellule électrochimique comprenant une anode, une cathode et une membrane semi-perméable séparant une chambre d'anode et une chambre de cathode ;
de mise en contact de ladite solution d'hydroxyde de sodium avec une solution contenant du chlorure de lithium dans une cuve de réaction pour produire une solution comprenant de l'hydroxyde de lithium ;
de mise en contact de la solution comprenant de l'hydroxyde de lithium avec du dioxyde de carbone gazeux dans une cuve de réaction pour produire une solution qui comporte du carbonate de lithium ; et
de séparation d'un écoulement de produit de la cuve de réaction afin d'obtenir un produit de carbonate de lithium et un écoulement comprenant du chlorure de sodium.

2. Procédé selon l'une quelconque des revendications précédentes, comprenant en outre une concentration de l'écoulement contenant du chlorure de lithium avant l'alimentation en écoulement de la cellule électrochimique.

3. Procédé selon l'une quelconque des revendications précédentes, dans lequel ladite solution contenant du chlorure de lithium est une saumure géothermique.

4. Procédé selon l'une quelconque des revendications précédentes, dans lequel la cathode est sélectionnée parmi le nickel, la maille de nickel catalysée, l'acier inoxydable et l'acier inoxydable revêtu.

5. Procédé selon l'une quelconque des revendications précédentes, dans lequel la cellule électrochimique comporte une anode, étant une anode dimensionnellement stable sélectionnée parmi une maille de titane revêtue d'oxyde de ruthénium, une maille de titane revêtue de platine et de carbone.

6. Procédé selon l'une quelconque des revendications précédentes, comprenant en outre le recyclage d'au moins une partie de l'écoulement de chlorure de sodium vers la cellule électrochimique pour la production d'hydroxyde de sodium.
